# FASCICULE DE BREVET EUROPEEN

(11) **EP 0 385 823 B1**
(45) Date de publication et mention de la délivrance du brevet: **21.04.1993**
(21) Numéro de dépôt: 90400387.8
(22) Date de dépôt: 13.02.1990
(51) Int. Cl.: B60J 5/04

(54) **Support d'équipements préassemblés et préréglés pour porte de véhicule automobile, et porte comportant ce support**
Vormontierter und eingestellter Ausrüstungsträger für Kraftfahrzeugtüren und eine Tür mit diesem Träger
Bracket for preassembled and preregulated equipment for a vehicle door, and door comprising this bracket

(30) Priorité: 03.03.1989 FR 8902801
(43) Date de publication de la demande: 05.09.1990
(73) Titulaire: ROCKWELL AUTOMOTIVE BODY SYSTEMS-FRANCE EN ABREGE:ROCKWELL ABS-FRANCE, 92082 Paris La Defense 2 (FR)
(72) Inventeur: Bertolini, Carlo, F-75011 Paris (FR)
(74) Mandataire: Martin, Jean-Paul

(56) Documents cités:
- EP-A- 0 304 769

## Description

La présente invention a pour objet une porte de"véhicule' automobile dont les équipements sont préassemblés sur un panneau porteur.

On connaît, par exemple de EP-A-0304769, des panneaux en tôle, porteurs d'équipements dont la structure, d'une part reçoit les composants à installer dans la porte (lève-vitre, vitre, coulisses, serrure, commande d'ouverture, tringlerie, haut-parleur etc), d'autre part sert à terminer le caisson de porte, et lui confère sa résistance finale.

De tels panneaux sont onéreux, en raison de leur épaisseur et de leur grande surface, qui correspond à peu près à l'ouverture du caisson nécessaire à l'introduction des composants, principalement la vitre, le lève-vitre et la serrure.

On a donc cherché à réduire l'épaisseur du panneau. Mais on est vite limité dans cette voie, car le panneau ne doit pas perdre trop de rigidité et de résistance en raison de sa fonction à cet égard dans le véhicule.

Une autre approche a consisté à intégrer au panneau certaines fonctions telles que la platine du lève-vitre, et à réaliser le pivotement des bras directement par tourillonnement dans des paliers réalisés dans le panneau porteur.

Cette dernière solution s'avère délicate à mettre en oeuvre, et nécessite l'utilisation de tôles relativement épaisses, ce qui en réduit l'intérêt économique et sur le plan des masses, en raison de l'épaisseur de la tôle à employer. De plus, le préréglage de la vitre est plus compliqué et la réparation éventuelle pose des problèmes, dus à la constitution des paliers d'articulation qui sont des éléments précis difficiles à démonter et à remplacer.

L'invention a donc pour but de proposer un support d'équipements dont la constitution permette de concilier simultanément un gain de masse, un gain économique dans son prix de revient, et un préréglage des composants.

Suivant l'invention, le support d'équipements comporte un panneau pourvu de moyens de fixation des équipements et de moyens de fixation à la porte, et une platine de lève-vitre pourvue de moyens de fixation sur la porte, indépendamment du panneau, le panneau et la platine étant fixés entre eux.

On comprend qu'une telle structure permette d'optimiser la masse du support par des épaisseurs différenciées en fonction des zones, donc de diminuer son prix de revient, tout en simplifiant la maintenance du support et la réparation des équipements. En effet il devient possible par exemple de démonter le panneau en laissant la platine de lève-vitre en place, retenue par ses fixations à la porte, afin de procéder à des interventions sur des équipements autres que le lève-vitre, et ce sans dérégler ce dernier. Au contraire, la conception des panneaux connus jusqu'à présent nécessitait leur entier démontage pour intervenir sur l'un quelconque des équipements montés sur ceux-ci.

Ainsi la structure du support selon l'invention permet d'effectuer le préréglage des équipements, notamment les éléments du lève-vitre, une réparation plus aisée et un coût de fabrication réduit. De plus l'ouverture du caisson de porte nécessaire à l'installation d'un tel support est minimale, et des renforcements locaux peuvent être ménagés sur le panneau là où ils s'avèrent nécessaires, afin d'optimiser les masses.

Dans une variante préférée, le panneau supporte tous les composants liés à la fonction serrure, tels que la poignée intérieure, la tringle, la serrure, etc, de manière à constituer un " module-serrure" autonome, tandis que le lève-vitre comporte les éléments nécessaires à la stabilité de la vitre, afin de former un "module-lève-vitre" lui aussi autonome.

Divers modes de réalisation de l'invention sont spécifiés dans les revendications dépendantes.

D'autres particularités et avantages de l'invention apparaîtront au cours de la description qui va suivre, faite en référence aux dessins annexés qui en illustrent plusieurs formes de réalisation à titre d'exemples non limitatifs.

La figure 1 est une vue en perspective du côté intérieur d'une porte de véhicule automobile adaptée pour recevoir un support d'équipements selon l'invention.

La figure 2 est une vue en perspective éclatée d'un support d'équipements selon l'invention ainsi que de la vitre correspondante.

La figure 3 est une vue en perspective du support d'équipements et de la vitre de la Fig.2 lors des opérations de préréglage, notamment de la position de la vitre et du lève-vitre par rapport à deux points de référence du panneau.

La figure 4 est une vue en élévation en bout schématique du panneau porteur et de la platine de lève-vitre de la Fig.2.

La figure 5 est une vue en élévation latérale du support d'équipements de la Fig.2 et d'une vitre, disposés sur un gabarit de préréglage de la vitre et de la platine du lève-vitre par rapport au panneau.

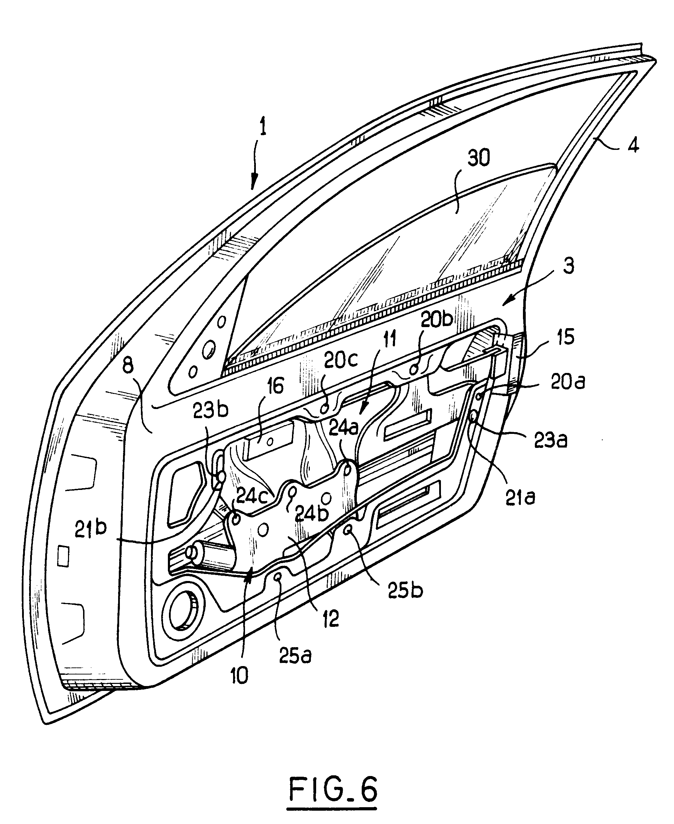

La figure 6 est une vue en perspective correspondant à la Fig.1, d'une porte à laquelle a été intégré le support d'équipements.

La figure 7 est une vue en perspective schématique de la porte et du support d'équipements des Fig.1 à 6 montrant les trous de centrage du support sur la porte.

La figure 8 est une vue en coupe longitudinale suivant 8-8 de la Fig.7 en supposant le panneau centré sur la porte.

La figure 9 est une vue en perspective d'une porte de véhicule à laquelle a été intégré une seconde forme de réalisation du support d'équipements conforme à l'invention.

La figure 10 est une vue en perspective d'une troisième forme de réalisation du support d'équipements selon l'invention.

La figure 11 est une vue en perspective d'une tôle à deux épaisseurs dans laquelle peut être découpé le panneau du support d'équipements selon l'invention.

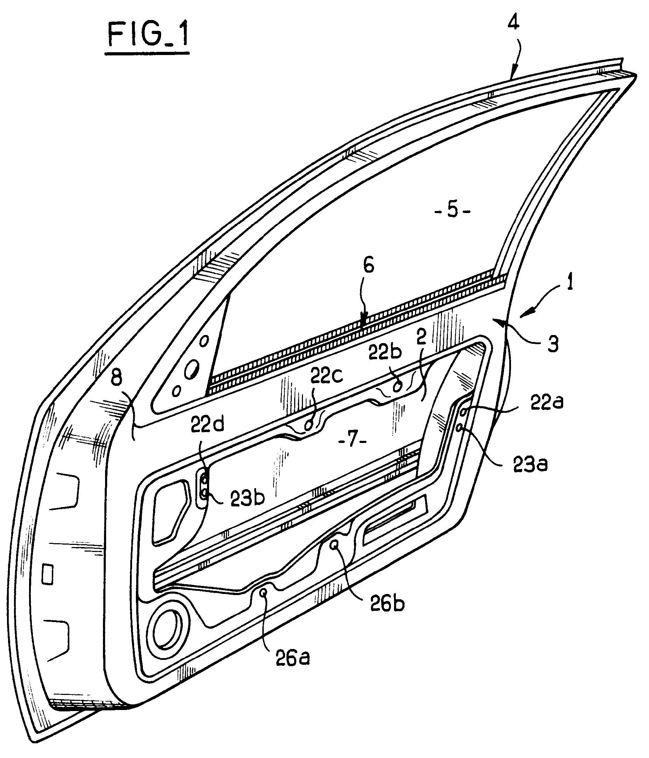

On voit à la Fig.1 une porte 1 de véhicule automobile présentant une ouverture 2 permettant le passage de composants non représentés (lève-vitre, serrure, ...). L'ouverture 2 est ménagée dans un caisson 3 de la porte 1, laquelle comporte un cadre de vitre 4 et une baie 5. La vitre peut coulisser dans le cadre 4 et être descendue à travers un puits de vitre 6 ménagé à l'intérieur du caisson 3.

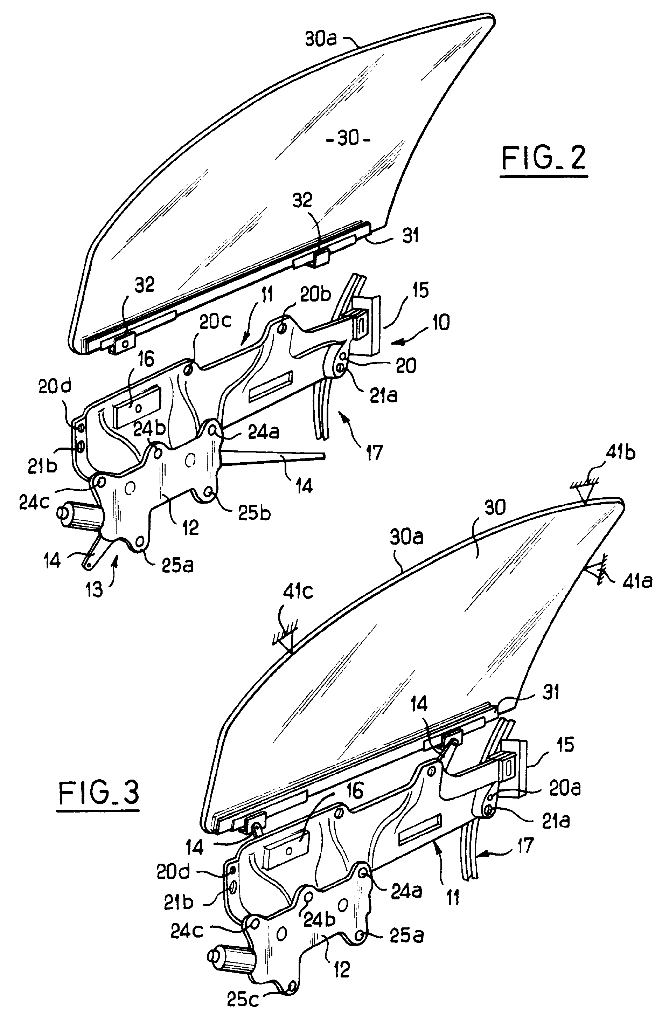

On voit à la Fig.2 un support d'équipements 10 composé d'un panneau 11 et d'une platine 12 d'un lève-vitre 13 munie de bras oscillants 14.

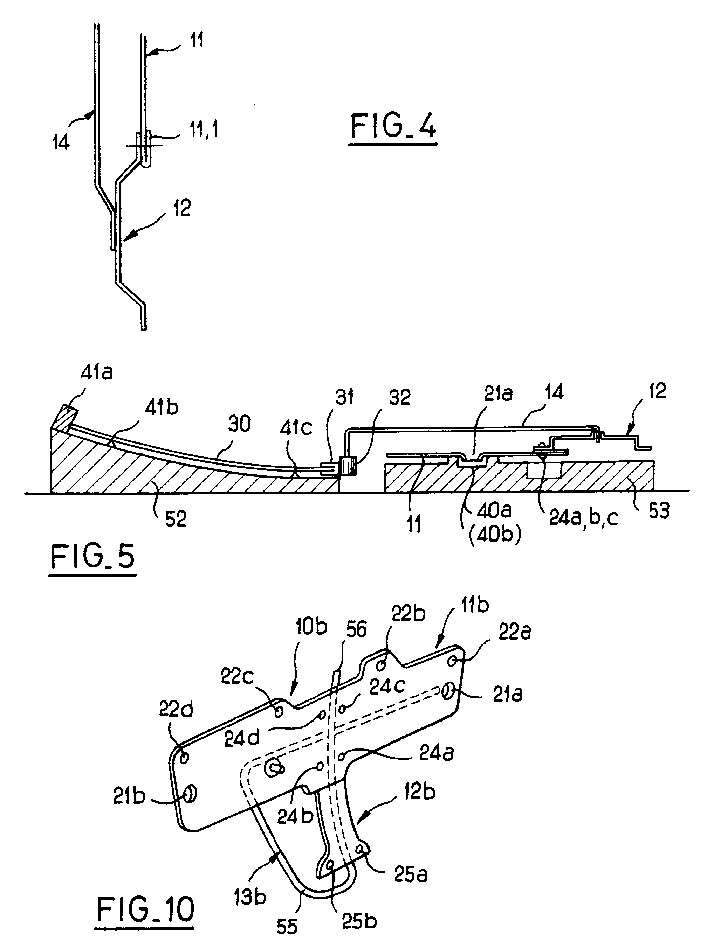

Le support 10 présente deux zones dont l'une formant platine 12 du lève-vitre 13 et l'autre forme un panneau 11 supportant d'autres équipements. Dans l'exemple décrit, le panneau 11 a une épaisseur inférieure à celle de la platine 12 en fonction des efforts normalement supportés par chaque zone 11 et 12. La figure 4 représente l'agencement de la fixation de la platine 12 sur le panneau 11, vue en bout. Le panneau 11 comporte avantageusement une surépaisseur locale formée par un repli 11.1 de la tôle constitutive, destiné à recevoir la platine 12; de tels renforts locaux peuvent par ailleurs exister à d'autres endroits.

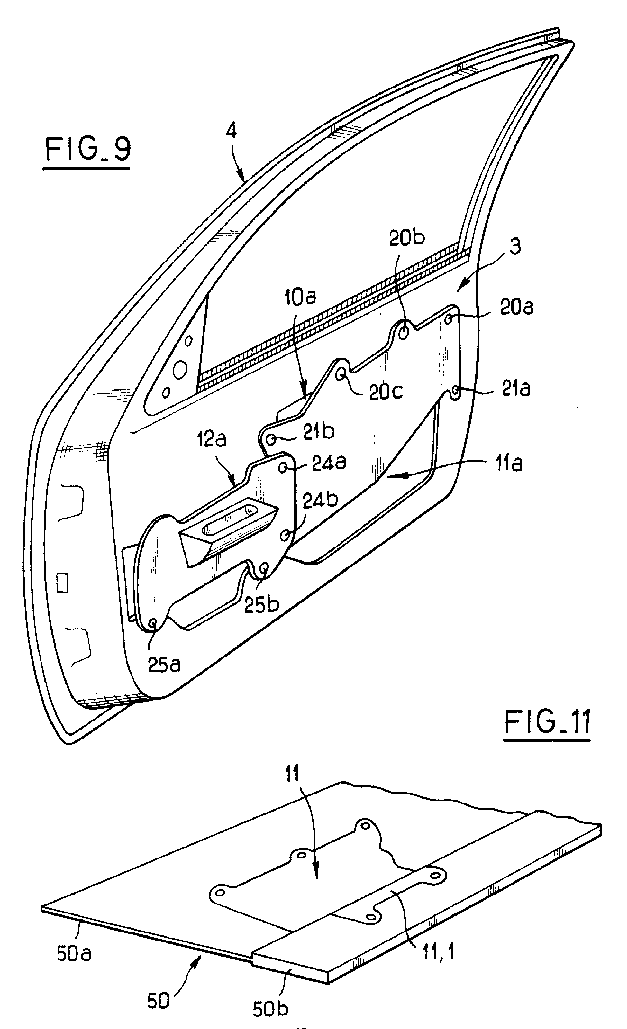

La fabrication du panneau 11 avec des épaisseurs ainsi différenciées peut être exécutée par exemple à partir d'une tôle 50 constituée de deux parties 50a, 50b (Fig.11) d'épaisseurs différentes et soudées l'une à l'autre en continu. On procède alors dans cette tôle 50 à la découpe du panneau 11 avec sa partie 11.1 de forte épaisseur réalisée dans la zone 50b de la tôle.

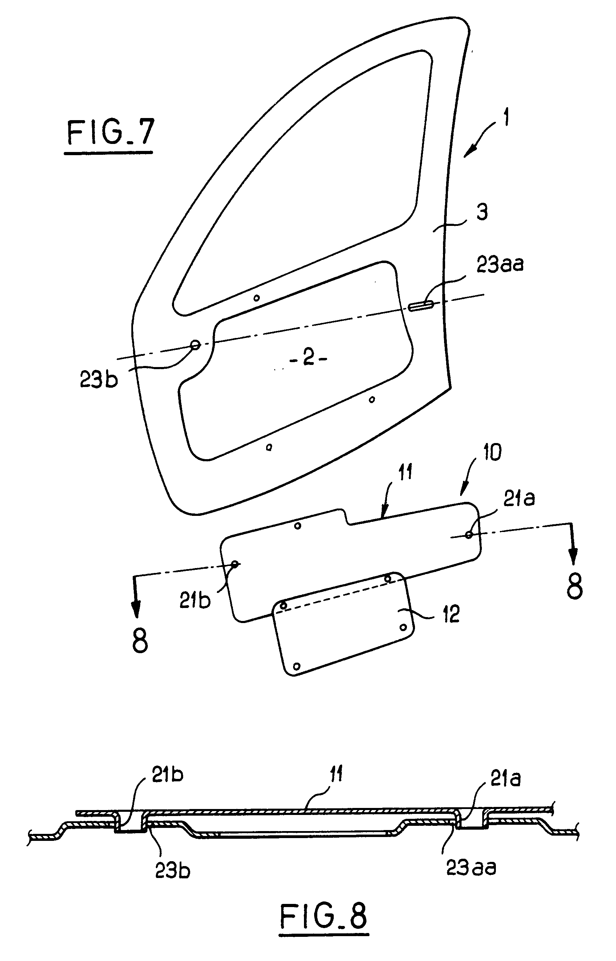

Le panneau 11 porte les équipements suivants : une serrure 15, une commande d'ouverture 16, une tringlerie non visible et une coulisse 17. Par ailleurs dans le panneau 11 sont prévus des moyens de fixation des équipements 15, 16 et 17 ainsi qu'à la porte 1. A cet effet dans le panneau 11 sont ménagés une série de trous de fixation 20a, 20b, 20c, 20d ainsi que deux collets de centrage 21a et 21b. Les trous de fixation 20a-20d coopèrent avec les trous correspondants 22a à 22d ménagés sur le bord de la découpe du caisson 3 de la porte 1, tandis que les collets de centrage 21a, 21b coopérent avec des trous de centrage correspondants 23a et 23b de la porte 1. Les collets 21a,b sont de préférence ronds et emboutis dans le panneau 11 (Fig.7, 8), tandis que les trous correspondants dans le caisson 3 sont de préférence un trou rond 23a ou un trou oblong 23aa et un trou rond 23b recevant respectivement les collets 21a et 21b. Le fait que le trou 23aa soit oblong facilite le centrage sur la porte 1 du panneau 11 auquel a été préalablement assemblée la platine 12.

Dans le panneau 11 est également formée une deuxième série de trous de fixation 24a, 24b, 24c de la platine 12, qui est percée de trous correspondants destinés à recevoir des organes de fixation non représentés. Enfin la platine 12 est percée de trous 25a et 25b pouvant venir en correspondance avec des trous 26a, 26b respectifs de la porte 1 (Fig.1) à laquelle elle peut ainsi également être fixée.

Les trous de fixation 24a, 24b, 24c permettent le réglage dans toute la plage de tolérance de fabrication de la vitre et du lève-vitre.

La vitre 30 est équipée à sa base d'une ferrure 31 munie de patins 32, de préférence conformes à ceux décrits dans la demande de brevet français 88 15 026 du 18 novembre 1988 au nom de la Demanderesse, publiée le 25 mai 1990 sous le numéro FR-A-2 639 395.

Les collets de centrage 21a et 21b associés aux trous de centrage 23a, 23b sont des points de référence permettant de définir la position de réglage du lève-vitre 13 sur le panneau 11, de façon que la vitre 30 ait son bord supérieur 30a en position nominale. Ceci permet de minimiser les dispersions de position du bord 30a par rapport à la partie supérieure du cadre 4.

Le préassemblage de la platine 12 et du lève-vitre 13 sur le panneau 11 ainsi que le préréglage de la vitre 30 s'effectuent par mise en position de l'ensemble vitre 30 - support 10 sur un gabarit constitué d'une première partie 52 équipée de butées 41a, 41b, 41c de positionnement de la vitre 30, et d'une seconde partie 53 recevant le support 10, ces deux parties reposant sur un plan horizontal (Fig.5). Les butées 41a-41c forment donc les références pour la vitre 30, tandis que la partie 53 du gabarit est munie de trous 40a, 40b adaptés pour recevoir les collets respectifs 21a, 21b du panneau 11. En pratique, on amène les bras 14 du lève-vitre 13 en position haute, à coïncider avec les patins 32, et on bloque les organes de fixation (non représentés) dans les trous 24a,b,c.

On conçoit donc que, par rapport aux collets de centrage 21a, 21b, la lisière supérieure 30a de la vitre 30 occupe une position nominale définie par les butées 41a, 41b, 41c par rapport aux trous 40a, 40b.

Les trous de fixation 20a à 20d et 22a à 22d ainsi que 26a, 26b et 25a, 25b ont un jeu suffisant pour pouvoir absorber des tolérances de construction, après positionnement des collets de centrage 21a, 21b dans les trous 23a, 23b lors du montage dans la porte.

On notera que les trous de centrage 23aa et 23b sont agencés de manière que l'axe du trou oblong 23aa passe par le centre du trou 23b (Fig.7).

Par ailleurs, il peut être envisagé, sur le dispositif de la Fig.3, un contrôle du bon fonctionnement de l'ensemble. Lors du réglage et du contrôle, les patins 32 de la ferrure 31 ne sont pas complètement verrouillés, de façon à permettre le désassemblage en vue du montage dans la porte 1 de la vitre 30 et du support 10.

Pour monter le support 10 dans la porte 1, on l'installe de manière que ses collets de centrage 21a, 21b se trouvent en vis-à-vis des trous de centrage 23a, 23b, puis on procède à la fixation définitive du panneau 11 sur la porte 1 par les trous associés 20a-20d et 22a-22d, et enfin 25a, 25b coopérant avec les trous 26a, 26b, la platine 12 ayant été préalablement assemblée au panneau 11 tel que décrit plus haut en référence aux Fig.2 et 3.

On introduit alors la vitre 30 par le puits de vitre 6, et on installe les patins 32 sur les extrémités des bras 14 du lève-vitre 13. (Ceci s'opère naturellement si on a livré les pièces en position correcte).

Enfin on verrouille les patins de la ferrure 31 comme décrit dans la demande de brevet précitée FR-A-2 639 395.

Il est possible de démonter le lève-vitre 13 en enlevant seulement les fixations correspondant aux trous 24a, 24b, 24c et 25a, 25b, tandis que le panneau 11 et les équipements correspondants restent en place. De même, il est possible de démonter et de remplacer le panneau 11 sans perdre le réglage de la vitre 30, et sans devoir démonter le lève-vitre 13. En effet la platine 12 du lève-vitre reste en place dans la porte 1 par ses trous de fixation 25a, 25b qui restent bloqués.

Ainsi le support combiné selon l'invention permet des interventions plus aisées qu'auparavant, puisqu'il n'est plus nécessaire de démonter et d'extraire de la porte la totalité du support, ce qui évite de plus de nouveaux réglages après remontage.

Comme on le sait, un panneau porteur d'équipements intérieur à une porte de véhicule participe à la rigidité et à la résistance de l'ensemble du véhicule. Cette fonction est remplie de manière satisfaisante par le support d'équipements constitué de la combinaison du panneau 11 et de la platine 12, et ce grâce à l'épaisseur suffisante de la zone de fixation 11.1 de la platine 12 sur le panneau 11. Comme on le sait, la rigidité de la porte traduit sa capacité à ne pas s'écraser sous un choc et à assurer un bon écrasement des joints de porte. D'autre part sa résistance est sa capacité à résister à la déformation permanente. En général une porte résistante est également rigide.

Par ailleurs la platine 12 peut dans un certain nombre de cas supporter elle-même des équipements, tels qu'une attache d'accoudoir, un haut-parleur de radio, une poignée d'ouverture de porte. La platine 12 participe dans tous les cas à la rigidité de la porte.

La Fig.9 représente une autre forme de réalisation du support selon l'invention, dans laquelle le panneau 11a est profilé de manière différente du panneau 11 et occupe une position différente. En effet la platine 12a du lève-vitre est ici fixée latéralement au panneau 11a par ses deux trous 24a, 24b. Des trous complémentaires 25a, 25b, 25c, 25d permettent sa fixation au panneau 3 de la porte 1. La fixation latérale de la platine 12a au panneau 11a améliore encore la rigidité de l'ensemble.

Dans la variante de la Fig.10, le support 10b comporte une platine 12b portant non plus un lève-vitre à bras oscillants 14, mais un lève-vitre 13b du type à rails 55, 56 convenablement attachés au panneau 11b. La platine 12b est située sous la zone centrale du panneau 11b, auquel elle est fixée par ses deux trous 24a, 24b. La coulisse de vitre 17 n'est pas nécessaire dans certains cas d'utilisation d'un lève-vitre à rails tel que 13b.

Une variante possible consiste à remplacer les collets 21a et 21b par de simples trous ronds de même diamètre que les trous 23a et 23b, et destinés à recevoir provisoirement lors du montage, des goupilles de centrage traversant ces trous ronds et les trous 23a, 23b d'autre part. Ces goupilles sont enlevées après achèvement de la fixation définitive.

Dans les exemples représentés, le support 10 est fixé en applique sur la tôle intérieure 8 du caisson 3. Mais on pourrait de la même façon, le fixer sur la tôle extérieure 7 de ce caisson 3, la porte 1 étant terminée par une peau extérieure décorative destinée à fermer l'ouverture correspondante.

## Revendications

1. Support d'équipements (15, 16, 17...) pour porte (1) de véhicule automobile, comportant un panneau (11, 11a, 11b) pourvu de moyens de fixation des équipements et de moyens de fixation à la porte, et une platine (12, 12a, 12b) de lève-vitre (13, 13a, 13b) pourvue de moyens de fixation sur la porte (1), indépendamment du panneau (11, 11a, 11b), le panneau et la platine étant fixés entre eux.

2. Support selon la revendication 1, caractérisé en ce que les moyens de fixation comprennent des moyens de centrage (21a, 21b) ménagés dans le panneau (11) et pouvant être associés à des moyens correspondants (23a, 23b) de la porte, ainsi que des trous complémentaires (20a-20d) destinés à recevoir des éléments de fixation à la porte, ces derniers trous ayant un jeu suffisant pour absorber les tolérances de construction après positionnement du support (10) sur ses moyens de centrage (20a, 20b, 23a, 23b).

3. Support selon la revendication 1, caractérisé en ce que le panneau (11, 11a, 11b) présente deux épaisseurs différentes.

4. Support selon l'une des revendications 1 à 3, caractérisé en ce que le panneau (11) est perçé de trous (24a, 24b, 24c) de fixation de la platine (12) du lève-vitre (13), dimensionnés pour permettre le réglage dans toute la plage de tolérance de fabrication de la vitre (30), du lève-vitre (13) et du panneau (11).

5. Support selon l'une des revendications 2 à 4, caractérisé en ce que les moyens de centrage comprennent des collets (21a, 21b) ménagés sur le panneau (11) et des trous correspondants (23a; 23aa, 23b) de la porte (1), aptes à recevoir les collets, l'un (23aa) des trous pouvant être oblong.

6. Support selon l'une des revendications 1 à 5, caractérisé en ce que la platine (12a) du lève-vitre (13) est fixée latéralement au panneau (11a).

7. Support selon l'une des revendications 1 à 6, caractérisé en ce que le lève-vitre (13) est du type à bras oscillants (14) ou à rails (55, 56).

8. Support selon la revendication 1, caractérisé en ce que les moyens de fixation comprennent des trous de centrage ménagés dans le panneau (11) et des trous correspondants (23a; 23aa, 23b) dans la porte (1), aptes à recevoir provisoirement des moyens de centrage, tels que des goupilles, ces goupilles étant retirées après fixation définitive, l'un (23aa) des trous pouvant être oblong.

9. Porte (1) de véhicule automobile, caractérisée en ce qu'elle comporte un support (10) d'équipements conforme à l'une quelconque des revendications 1 à 8 ainsi qu'un caisson (3) dans lequel sont ménagés une ouverture (2) de passage dudit support (10), et des trous (23a, 23aa; 23b) de centrage du panneau (11), ainsi que des trous (22a-22d) de fixation du panneau (11) et (26a, 26b) de fixation de la platine (12), tous ces trous étant répartis sur les bords de ladite ouverture (2).

## Patentansprüche

1. Ausrüstungsträger (15,16,17, ...) für die Tür (1) eines Kraftfahrzeugs, mit einer Tafel (11,11a,11b), die mit Mitteln zur Befestigung an der Tür und mit Befestigungsmitteln für die Ausrüstungen versehen ist, und mit einer Platine (12,12a,12b) für einen Fensterheber (13,13a,13b), die mit Mitteln zur Befestigung an der Tür (1) unabhängig von der Tafel (11,11a,11b) versehen ist, wobei die Tafel und die Platine aneinander fixiert sind.

2. Träger nach Anspruch 1, dadurch **gekennzeichnet**, daß die Befestigungsmittel Zentriermittel (21a,21b), die in der Tafel (11) ausgebildet sind und entsprechenden Mitteln (23a,23b) der Tür zugeordnet werden können, sowie komplementäre Löcher (20a-20d) umfassen, die zur Aufnahme von Befestigungselementen zur Befestigung an der Tür dienen, welch letztere Löcher ein ausreichendes Spiel aufweisen, um Herstellungstoleranzen nach dem Positionieren des Trägers (10) auf den Zentriermitteln (20a,20b,23a,23b) auszugleichen.

3. Träger nach Anspruch 1, dadurch **gekennzeichnet**, daß die Tafel (11,11a,11b) zwei unterschiedliche Dicken aufweist.

4. Träger nach einem der Ansprüche 1 bis 3, dadurch **gekennzeichnet**, daß die Tafel (11) von Löchern (24a,24b,24c) zur Befestigung der Platine (12) des Fensterhebers (13) durchsetzt ist, welche Löcher so dimensioniert sind, daß sie die Einstellung im gesamten Bereich der Herstellungstoleranzen der Fensterscheibe (30), des Fensterhebers (13) und der Tafel (11) gestatten.

5. Träger nach einem der Ansprüche 2 bis 4, dadurch **gekennzeichnet**, daß die Zentriermittel an der Tafel (11) ausgebildete Hülsen (21a,21b) und entsprechende Löcher (23a;23aa,23b) der Tür (1) umfassen, welche Löcher zur Aufnahme der Hülsen ausgebildet sind, wobei eines (23aa) der Löcher als Langloch ausgebildet sein kann.

6. Träger nach einem der Ansprüche 1 bis 5, dadurch **gekennzeichnet**, daß die Platine (12a) des Fensterhebers (13) seitlich an der Tafel (11a) befestigt ist.

7. Träger nach einem der Ansprüche 1 bis 6, dadurch **gekennzeichnet**, daß der Fensterheber (13) von der Bauart mit schwenkbaren Armen (14) oder mit Schienen (55,56) ist.

8. Träger nach Anspruch 1, dadurch **gekennzeichnet**, daß die Befestigungsmittel in der Tafel (11) ausgebildete Zentrierlöcher und entsprechende Löcher (23a;23aa,23b) in der Tür (1) umfassen, die zur provisorischen Aufnahme der Zentriermittel, wie etwa von Splinten, ausgebildet sind, wobei diese Splinte nach der endgültigen Befestigung herausgezogen werden, und wobei eines (23aa) der Löcher als Langloch ausgebildet sein kann.

9. Kraftfahrzeugtür (1), dadurch **gekennzeichnet**, daß sie einen Ausrüstungsträger (10) nach einem der Ansprüche 1 bis 8 sowie einen Rahmen (3), in dem eine Öffnung (2) zur Durchführung des Trägers (10) ausgebildet ist, und Löcher (23a,23aa;23b) zur Zentrierung der Tafel (11) sowie Löcher (22a-22d) zur Befestigung der Tafel (11) und (26a,26b) zur Befestigung der Platine (12) aufweist, wobei all diese Löcher auf den Rändern der genannten Öffnung (2) verteilt sind.

## Claims

1. Support for fittings (15, 16, 17...) for a motor vehicle door (1) comprising a panel (11, 11a, 11b) provided with means for fixing the fittings and means for fixing to the door, and a plate (12, 12a, 12b) for a window handle (13, 13a, 13b) provided means for fixing onto the door (1), independently of the panel (11, 11a, 11b), the panel and the plate being fixed together.

2. Support according to claim 1, characterized in that the fixing means comprise centering means (21a, 21b) provided in the panel (11) and which can be connected to corresponding means (23a, 23b) of the door, as well as complementary holes (20a-20d) intended to receive the elements for fixing to the door, the aforementioned holes having sufficient play to take up the manufacturing tolerances after the positioning of the support (10) on its centering means (20a, 20b, 23a, 23b).

3. Support according to claim 1, characterized in that the panel (11, 11a, 11b) has two different thicknesses.

4. Support according to one of claims 1 to 3, characterized in that the panel (11) is pierced with holes (24a, 24b, 24c) for fixing the plate (12) of the window handle (13), of such a size as to allow adjustement within the entire manufacturing tolerance range of the window (30), the window handle (13) and the panel (11).

5. Support according to one of claims 2 to 4, characterized in that the centering means comprise collars (21a, 21b) provided in the panel (11) and corresponding holes (23a, 23aa, 23b) of the door (1), suitable for receiving the collars, one (23aa) of the holes possibly being oblong.

6. Support according to one of claims 1 to 5, characterized in that the plate (12a) of the window handle (13) is fixed laterally to the panel (11a).

7. Support according to one of claims 1 to 6, characterized in that the window handle (13) is a pull-rod type (14) or a rail type (55, 56).

8. Support according to claim 1, characterized in that the fixing means comprise centering holes provided in the panel (11) and corresponding holes (23a, 23aa, 23b) in the door (1), suitable to provisionally receive the centering means, such as pins, these pins being removed after the final fixing, on (23aa) of the holes possibly being oblong.

9. Motor vehicle door (1), characterized in that it comprises a support (10) for fitting in accordance with any one of claims 1 to 8 as well as a casing (3) in which are provided a recess (2) for inserting the said support (10), and holes (23a, 23aa, 23b) for centering the panel (11), as well as holes (22a-22d) for fixing the panel (11) and (26a, 26b) for fixing the plate (12), all these holes being distributed along the edges of said recess (2).
